# EUROPEAN PATENT APPLICATION

(11) **EP 2 485 440 A1**
(43) Date of publication of application: **08.08.2012**
(21) Application number: 10829517.1
(22) Date of filing: 09.11.2010
(51) Int. Cl.: H04L 12/56

(54) **SYSTEM AND METHOD FOR SERVICE SCHEDULING AND CONTROL DEVICE**

(30) Priority: 11.11.2009 CN 200910210869
(71) Applicant: ZTE Corporation, Shenzhen, Guangdong 518057 (CN)
(72) Inventor: SHEN, Yuhua, Guangdong 518057 (CN)
(74) Representative: Price, Nigel John King
(86) International application number: PCT/CN2010/078537
(87) International publication number: WO 2011/057553

(57) **Abstract**

The disclosure discloses a service scheduling system, a service scheduling method, and a control device; the control device is added to the service scheduling system, and the control device obtains connection status information of each bus port in the service scheduling system respectively, updates a first corresponding relationship between transfer units in a service scheduling device and transfer units in service processing devices according to the obtained connection status information of the bus port when judging that changed connection status information is obtained, and sends the updated first corresponding relationship to the service scheduling device to enable the service scheduling device to schedule services to be scheduled according to the updated first corresponding relationship. By means of the technical solutions provided by the disclosure, the problem presenting in the prior art that modifying the software codes when the corresponding relationship among the transfer units is updated results in the poorer expansibility of the service scheduling system and the lower processing efficiency of the system can be solved.

## Description

### TECHNICAL FIELD

The disclosure relates to the field of communications, and particularly to a service scheduling system, a service scheduling method, and a control device.

### BACKGROUND

A communication system comprises a plurality of service processing devices for processing services; after a certain service processing device has processed the service, it may need to schedule the processed service to other service processing devices for subsequent processing; in the prior art, a service scheduling device is generally adopted to schedule the service.

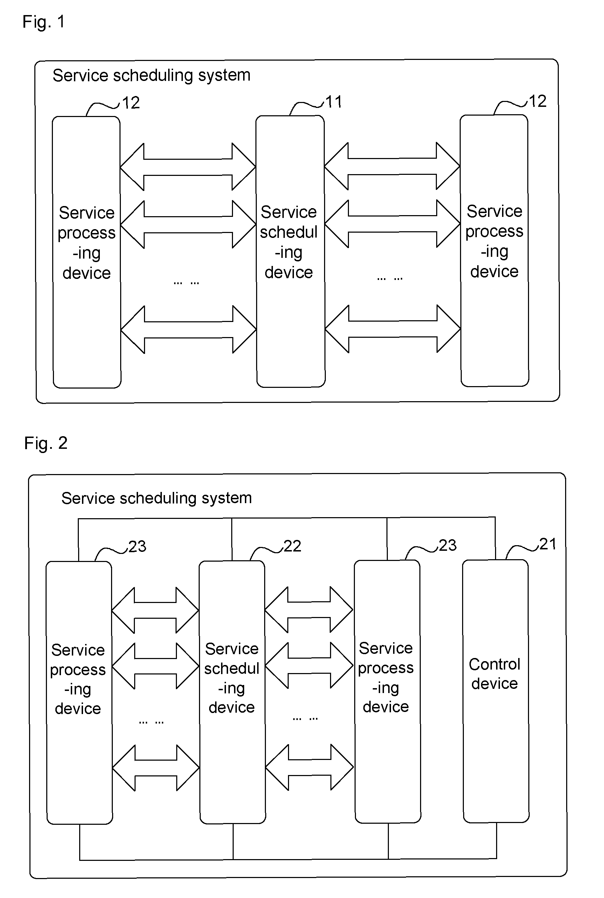

As shown in Fig. 1, an existing service scheduling system comprises a service scheduling device 11 and at least two service processing devices 12; after the service processing device 12 has processed a service, it sends the service to the service scheduling device 11, wherein the service is a service to be scheduled. The service scheduling device 11 is connected with the service processing devices 12 via a plurality of buses, and ports for connecting the buses on the service scheduling device 11 and the service processing devices 12 are called bus ports.

One bus port comprises a plurality of transfer units, which are in one to one corresponding to transfer units in a connected bus port, so that the corresponding transfer unit can be determined as long as two connected bus ports are determined; for example, a service processing device A is connected with a service scheduling device a via two buses, comprising a bus 1 and a bus 2, wherein a bus port A1 in the service processing device A is connected with a bus port a1 in the service scheduling device a via the bus 1, and a bus port A2 in the service processing device A is connected with a bus port a2 in the service scheduling device a via the bus 2; all of the bus ports A1, A2, a1 and a2 comprise two transfer units respectively, wherein the bus port A1 comprises a transfer unit A11 and a transfer unit A12, the bus port A2 comprises a transfer unit A21 and a transfer unit A22, the bus port a1 comprises a transfer unit a11 and a transfer unit a12, and the bus port a2 comprises a transfer unit a21 and a transfer unit a22, then a corresponding relationship among the transfer units is shown in Table 1:

**Table 1**

| | |
|---|---|
| Transfer unit A11 | Transfer unit a11 |
| Transfer unit A12 | Transfer unit a12 |
| Transfer unit A21 | Transfer unit a21 |
| Transfer unit A22 | Transfer unit a22 |

that is, the transfer unit A11 in the service processing device A sends the service to be scheduled to the transfer unit a11 in the service scheduling device a via the bus 1, the transfer unit A12 in the service processing device A sends the service to be scheduled to the transfer unit a12 in the service scheduling device a via the bus 1, and the rest may be deduced by analogy.

In addition, a scheduling rule for the service scheduling device to schedule the services can be pre-configured, for example, the following rule is preset:
a service to be scheduled sent by the transfer unit A11 in the bus port A1 of the service processing device A is scheduled to a transfer unit B24 in a bus port B2 of a service processing device B.

If the service scheduling device a receives the service to be scheduled from the transfer unit A11 in the bus port A1 of the service processing device A, it can be seen from the above-mentioned preset scheduling rule that, the service needs to be scheduled to the transfer unit B24 in the bus port B2 of the service processing device B, at the moment, the service scheduling device a needs to send the service to be scheduled to the transfer unit B24, so the service scheduling device a must learn from which transfer unit of the service scheduling device a the service is sent, that is, it needs to determine the transfer unit corresponding to the transfer unit B24 from all the transfer units of the service scheduling device a; therefore, the service scheduling device a needs to learn the corresponding relationship among the transfer units of the service scheduling device a and the transfer units in the service processing devices, i.e., the corresponding relationship among the transfer units in the service scheduling system.

In the prior art, the corresponding relationship among the transfer units is generally written into software codes of the service scheduling device; when scheduling a service, the service scheduling device can directly search the corresponding relationship for a transfer unit of the service scheduling device to send the service according to the transfer unit to which the service needs to be scheduled, and then the service scheduling device sends the service to the transfer unit to which the service needs to be scheduled based on the searched transfer unit; if a connection status of the bus ports in the service scheduling system is changed, for example service processing devices are added, bus ports of the service processing devices or service scheduling devices are added, connection relationship among bus ports are changed and the like, the corresponding relationship among transfer units stored in the service scheduling devices needs to be updated at the moment, so the software codes of the service scheduling device must be modified, however, it needs to consume many resources to modify the codes due to a large number of software codes stored in the service scheduling device, which results in poorer expansibility of the service scheduling system and lower processing efficiency of the system.

### SUMMARY

In view of the above problem, embodiments of the disclosure provide a service scheduling system, a service scheduling method and a control device so as to solve the problem in the prior art that modifying software codes when a corresponding relationship among transfer units is updated thereby resulting in poorer expansibility of the service scheduling system and lower processing efficiency of the system.

To solve the above-mentioned technical problem, the technical solutions of the embodiments of the disclosure are as follows.

A service scheduling system comprises a service scheduling device and at least two service processing devices, wherein the service scheduling device is connected with the service processing devices via bus ports, further comprises a control device, wherein
the control device is configured to obtain connection status information of each bus port in the service scheduling system respectively, update a first corresponding relationship among transfer units in the service scheduling device and transfer units in the service processing devices according to the obtained connection status information of the bus port when judging that the changed connection status information is obtained, and send the updated first corresponding relationship to the service scheduling device;
the service scheduling device is configured to receive the updated first corresponding relationship sent from the control device, and schedule services to be scheduled sent from the service processing devices respectively according to the updated first corresponding relationship; and
the service processing device is configured to send the services to be scheduled to the service scheduling device, and process the services scheduled by the service scheduling device.

A service scheduling method comprises: obtaining connection status information of each bus port in a service scheduling system respectively by a control device; updating a first corresponding relationship among transfer units in a service scheduling device and transfer units in service processing devices according to the obtained connection status information of the bus port when judging that the changed connection status information is obtained; and sending the updated first corresponding relationship to the service scheduling device in the service scheduling system to indicate the service scheduling device to schedule services according to the updated first corresponding relationship.

The step of updating the first corresponding relationship by the control device specifically may comprise: obtaining a second corresponding relationship among the transfer units in the service processing devices and the bus ports in the service scheduling system; and determining a third corresponding relationship among the bus ports in the service scheduling system according to the obtained connection status information of the bus ports; and updating the first corresponding relationship among the transfer units in the service scheduling device and the transfer units in the service processing devices according to the second corresponding relationship and the third corresponding relationship.

The method may further comprise: sending the determined third corresponding relationship among the bus ports in the service scheduling system to the service processing devices in the service scheduling system by the control device.

The control device may send the updated first corresponding relationship and the determined third corresponding relationship to the service scheduling device and the service processing devices respectively in a form of a document.

The connection status information of the bus port may comprise: information for identifying that the bus port is in an idle status; or information for identifying that the bus port is in a working status, and identification information of a bus port connected with the bus port.

A control device comprises:
an obtaining module configured to obtain connection status information of each bus port in a service scheduling system respectively;
a judging module configured to judge whether the obtaining module obtains the changed connection status information;
an updating module configured to update a first corresponding relationship among transfer units in a service scheduling device and transfer units in service processing devices according to the connection status information of the bus port obtained by the obtaining module when the judging module judges that the obtaining module obtains the changed connection status information; and
a first sending module configured to send the first corresponding relationship updated by the updating module to the service scheduling device in the service scheduling system.

The updating module may specifically comprise:
an obtaining submodule configured to obtain a second corresponding relationship among the transfer units in the service processing devices and the bus ports in the service scheduling system;
a determining submodule configured to determine a third corresponding relationship among the bus ports in the service scheduling system according to the connection status information of the bus ports obtained by the obtaining module; and
an updating submodule configured to update the first corresponding relationship among the transfer units in the service scheduling device and the transfer units in the service processing devices according to the second corresponding relationship obtained by the obtaining submodule and the third corresponding relationship determined by the determining submodule.

The control device may further comprise: a second sending module configured to send the third corresponding relationship among the bus ports in the service scheduling system determined by the determining submodule to the service processing devices in the service scheduling system.

The first sending module and the second sending module may send the first corresponding relationship updated by the updating module and the third corresponding relationship determined by the determining submodule to the service scheduling device and the service processing devices respectively in a form of a document.

In the technical solutions of the embodiments in the disclosure, the control device is added to the service scheduling system, and the control device obtains the connection status information of each bus port in the service scheduling system respectively, updates the first corresponding relationship among the transfer units in the service scheduling device and the transfer units in each service processing device according to the obtained connection status information of each bus port when judging that the changed connection status information is obtained, and sends the updated first corresponding relationship to the service scheduling device to enable the service scheduling device to schedule the services to be scheduled without modifying the software codes in the service scheduling device anymore according to the updated first corresponding relationship, so that expansibility of the service scheduling system and processing efficiency of the system are effectively improved.

### BRIEF DESCRIPTION OF THE DRAWINGS

Fig. 1 shows a schematic diagram of a structure of a service scheduling system in the prior art;
Fig. 2 shows a schematic diagram of a structure of a service scheduling system in an embodiment of the disclosure;
Fig. 3 shows a schematic diagram of a flow of a service scheduling method in an embodiment of the disclosure;
Fig. 4 shows a schematic diagram of a flow of a specific implementation method for a service scheduling device to schedule services according to an updated first corresponding relationship in an embodiment of the disclosure; and
Fig. 5 shows a schematic diagram of a structure of a control device in an embodiment of the disclosure.

### DETAILED DESCRIPTION

The main implementation principle, a specific implementation method and beneficial effects that can be achieved correspondingly by technical solutions of embodiments of the disclosure will be described in detail with reference to the drawings.

Fig. 2 shows a schematic diagram of a structure of a service scheduling system in an embodiment of the disclosure, wherein the service scheduling system comprises a control device 21, a service scheduling device 22 and at least two service processing devices 23, and the service scheduling device 22 is connected with the service processing devices 23 via bus ports, wherein
the control device 21 is configured to obtain connection status information of each bus port in the service scheduling system respectively, update a first corresponding relationship among transfer units in the service scheduling device 22 and transfer units in the service processing devices 23 according to the obtained connection status information of the bus port when judging that the changed connection status information is obtained, and send the updated first corresponding relationship to the service scheduling device 22;
the service scheduling device 22 is configured to receive the updated first corresponding relationship sent from the control device 21, and schedule services to be scheduled sent from the service processing devices 23 respectively according to the updated first corresponding relationship; and
the service processing device 23 is configured to send the services to be scheduled to the service scheduling device 22, and process the services scheduled by the service scheduling device 22.

It can be seen from the above processing procedure that, in the technical solutions of the embodiments of the disclosure, the control device is added to the service scheduling system, and the control device obtains the connection status information of the bus port in the service scheduling system respectively, updates the first corresponding relationship among the transfer units in the service scheduling device and the transfer units in service processing devices according to the obtained connection status information of the bus port when judging that the changed connection status information is obtained, and sends the updated first corresponding relationship to the service scheduling device to enable the service scheduling device to schedule the services to be scheduled without modifying software codes in the service scheduling device anymore according to the updated first corresponding relationship, so that expansibility of the service scheduling system and processing efficiency of the system are effectively improved.

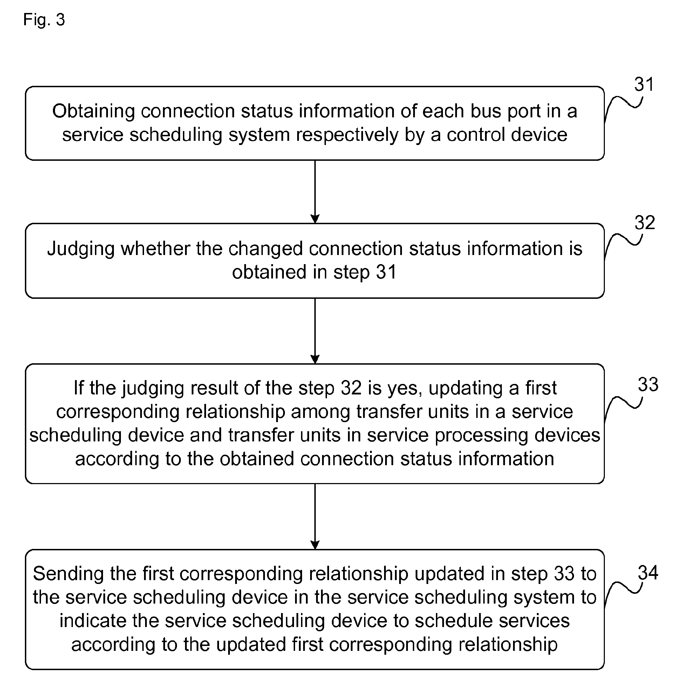

Based on the service scheduling system as shown in Fig. 2, an embodiment of the disclosure provides a service scheduling method, as shown in Fig. 3; the specific processing procedure is as follows.

Step 31: the control device obtains connection status information of each bus port in the service scheduling system respectively;
wherein the bus port can be in either a working status or an idle status; if the bus port is in the idle status, the connection status information of the bus port comprises information for identifying that the bus port is in the idle status; if the bus port is in the working status, the connection status information of the bus port comprises information for identifying that the bus port is in the working status, and identification information of a bus port connected with the bus port.

For example, if a bus port A3 is in the working status and is connected with a bus port a4, the connection status information of the bus port A3 can be: the bus port being in the working status and connected with the bus port a4; and the connection status information of the bus port a4 is: the bus port being in the working status and connected with the bus port A3.

In an embodiment of the disclosure, the control device can directly detect the connection status information of the bus port in the service scheduling system, or can receive passively, for example, a network manager sends the connection status information of the bus port in the service scheduling system to the control device.

Step 32: the control device judges whether the changed connection status information is obtained in step 31;
if the bus port A3 of the service processing device A is connected with the bus port a4 of the service scheduling device before the control device obtains the connection status information, but the bus port A3 is no longer connected with the bus port a4 and connected with the bus port a3 after the control device obtains the connection status information, then the connection status information of the bus port A3 at the moment is: the bus port being in the working status and connected with the bus port a3, therefore, the connection status information of the bus port A3 is changed, and meanwhile the connection status information of both the bus port a4 and the bus port a3 is changed.

Step 33: if the judging result of step 32 is yes, the first corresponding relationship among the transfer units in the service scheduling device and the transfer units in the service processing devices is updated according to the obtained connection status information of the bus port;
wherein the process that the control device updates the first corresponding relationship can be and not intended to limit the follows: the control device firstly obtains a second corresponding relationship among the transfer units in the service processing devices and the bus ports in the service scheduling system, determines a third corresponding relationship among the bus ports in the service scheduling system according to the obtained connection status information of the bus ports, and updates the first corresponding relationship among the transfer units in the service scheduling device and the transfer units in the service processing devices according to the second corresponding relationship and the third corresponding relationship.

For example, if the connection status information of the bus port obtained by the control device is: the service processing device A and the service processing device B being connected with the service scheduling device a respectively, the bus ports A1 and A2 of the service processing device A being connected with the bus ports a2 and a3 of the service scheduling device respectively, and the bus ports B1 and B2 of the service processing device B being connected with the bus ports a1 and a4 of the service scheduling device respectively, then the third corresponding relationship among the bus ports in the service scheduling system can be and not intended to limit Table 2.

**Table 2:**

| | |
|---|---|
| Bus port A1 | Bus port a2 |
| Bus port A2 | Bus port a3 |
| Bus port B1 | Bus port a1 |
| Bus port B2 | Bus port a4 |

If the control device needs to determine the corresponding relationship among the transfer units, it also needs to learn the second corresponding relationship among the transfer units in the service processing devices and the bus ports in the service scheduling system, that is, it needs to obtain the corresponding relationship among the transfer units in the service processing device A and the bus ports A1 and A2, and the corresponding relationship among the transfer units in the service processing device B and the bus ports B1 and B2. The corresponding relationship among the transfer units in the service processing device A and the bus ports can be and not intended to limit Table 3.

**Table 3:**

| | |
|---|---|
| Transfer unit A11 | Bus port A1 |
| Transfer unit A12 | Bus port A1 |
| Transfer unit A21 | Bus port A2 |
| Transfer unit A22 | Bus port A2 |

The corresponding relationship among the transfer units in the service processing device B and the bus ports can be and not intended to limit Table 4.

**Table 4:**

| | |
|---|---|
| Transfer unit B11 | Bus port B1 |
| Transfer unit B12 | Bus port B1 |
| Transfer unit B21 | Bus port B2 |
| Transfer unit B22 | Bus port B2 |

According to the corresponding relationships shown in Table 2, Table 3 and Table 4, the control device can firstly determine the corresponding relationship among the bus ports in the service scheduling device and the transfer units in the service processing devices, wherein the corresponding relationship can be and not intended to limit Table 5.

**Table 5:**

| | |
|---|---|
| Bus port a1 | Transfer unit B11 |
| | Transfer unit B12 |
| Bus port a2 | Transfer unit A11 |
| | Transfer unit A12 |
| Bus port a3 | Transfer unit A21 |
| | Transfer unit A22 |
| Bus port a4 | Transfer unit B21 |
| | Transfer unit B22 |

Since the corresponding relationship among the transfer units in a bus port of the service scheduling device and the transfer units on a bus port connected with the bus port of the service scheduling device and positioned in the service processing device is fixed, for example, if a bus port C1 is connected with a bus port D2, then a transfer unit C11 in the bus port C1 is consequentially corresponding to a transfer unit D21 in the bus port D2; therefore, the control device can directly determine the first corresponding relationship among the transfer units in the service scheduling device and the transfer units in the service processing devices according to the corresponding relationship shown in Table 5, the determined first corresponding relationship can be taken as the updated first corresponding relationship, and the updated first corresponding relationship can be and not intended to limit Table 6.

**Table 6:**

| | |
|---|---|
| Transfer unit a11 | Transfer unit B11 |
| Transfer unit a12 | Transfer unit B12 |
| Transfer unit a21 | Transfer unit A11 |
| Transfer unit a22 | Transfer unit A12 |
| Transfer unit a31 | Transfer unit A21 |
| Transfer unit a32 | Transfer unit A22 |
| Transfer unit a41 | Transfer unit B21 |
| Transfer unit a42 | Transfer unit B22 |

Step 34: the first corresponding relationship updated in step 33 is sent to the service scheduling device in the service scheduling system to indicate the service scheduling device to schedule services according to the updated first corresponding relationship.

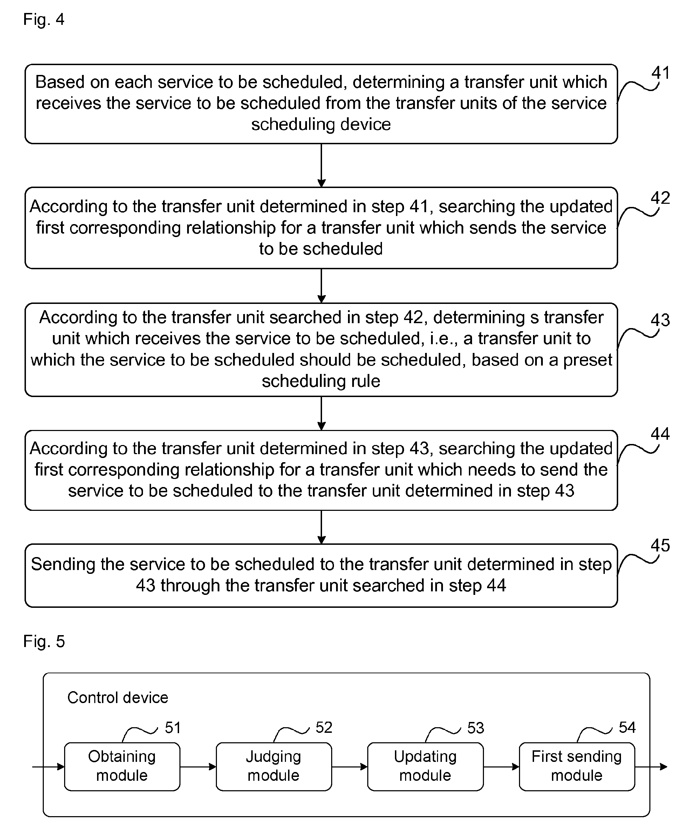

As shown in Fig. 4, the procedure that the service scheduling device schedules services according to the received updated first corresponding relationship is as follows.

Step 41: based on each service to be scheduled, determining a transfer unit which receives the service to be scheduled from transfer units of the service scheduling device.

Step 42: according to the transfer unit determined in step 41, searching the updated first corresponding relationship shown in Table 6 for a transfer unit which sends the service to be scheduled.

Step 43: according to the transfer unit searched in step 42, determining a transfer unit which receives the service to be scheduled, i.e., a transfer unit to which the service to be scheduled should be scheduled, based on a preset scheduling rule.

Step 44: according to the transfer unit determined in step 43, searching the updated first corresponding relationship shown in Table 6 for a transfer unit in the above-mentioned service scheduling device, which needs to send the service to be scheduled to the transfer unit determined in step 43.

Step 45: sending the service to be scheduled to the transfer unit determined in step 43 through the transfer unit searched in step 44.

In the embodiment of the disclosure, the control device can further send the determined third corresponding relationship among the bus ports in the service scheduling system to the service processing devices in the service scheduling system, then the service processing device can determine the bus port, which sends the service to be scheduled, in the service scheduling device according to the third corresponding relationship, can further determine the transfer unit, which sends the service to be scheduled, in the service scheduling device; when the service processing device needs to send alarm information to a network side, information of the determined transfer unit can be included in the alarm information.

In addition, in the embodiment of the disclosure, the control device sends the updated first corresponding relationship and the determined third corresponding relationship to the service scheduling device and the service processing devices respectively in the form of a document.

In the embodiment of the disclosure, if a network manager needs to change the connection status of the bus ports in the service scheduling system, the network manager can power off the service scheduling system to obtain the second corresponding relationship among the transfer units in the service processing devices and the bus ports in the service scheduling system, determine the third corresponding relationship among the bus ports in the service scheduling system according to the changed connection status of the bus ports, and then upload the above-mentioned second corresponding relationship and the third corresponding relationship to the control device in the form of a document; after the service scheduling system is powered on, the control device sends the above-mentioned second corresponding relationship and the third corresponding relationship to the service scheduling device, and the service scheduling device determines the updated first corresponding relationship according to the received second corresponding relationship and the third corresponding relationship and schedules services according to the updated first corresponding relationship. Furthermore, the control device can further send the determined third corresponding relationship among the bus ports in the service scheduling system to the service processing devices in the service scheduling system, and the service processing device can determine the bus port of the service scheduling device which sends services according to the received third corresponding relationship.

The control device in the embodiment of the disclosure can be and not intended to limit to be arranged in the master control device in the existing service scheduling system, or can further be arranged in the service scheduling service, or can still be arranged independently certainly.

As shown in Fig. 5, another embodiment of the disclosure further provides a control device, which comprises an obtaining module 51, a judging module 52, an updating module 53 and a first sending module 54, wherein
the obtaining module 51 is configured to obtain connection status information of each bus port in a service scheduling system respectively;
the judging module 52 is configured to judge whether the obtaining module 51 obtains the changed connection status information;
the updating module 53 is configured to, when the judging module judges that the obtaining module obtains the changed connection status information, update a first corresponding relationship among transfer units in a service scheduling device and transfer units in service processing devices according to the connection status information of the bus port obtained by the obtaining module 51; and
the first sending module 54 is configured to send the first corresponding relationship updated by the updating module 53 to the service scheduling device in the service scheduling system.

Preferably, the updating module 53 specifically comprises an obtaining submodule, a determining submodule and an updating submodule; wherein the obtaining submodule is configured to obtain a second corresponding relationship among the transfer units in the service processing devices and the bus ports in the service scheduling system; the determining submodule is configured to determine a third corresponding relationship among the bus ports in the service scheduling system according to the connection status information of the bus ports obtained by the obtaining module 51; and the updating submodule is configured to update the first corresponding relationship among the transfer units in the service scheduling device and the transfer units in the service processing devices according to the above-mentioned second corresponding relationship obtained by the obtaining submodule and the third corresponding relationship determined by the determining submodule.

Preferably, the above-mentioned control device further comprises a second sending module configured to send the third corresponding relationship among the bus ports in the service scheduling system determined by the determining submodule to the service processing devices in the service scheduling system.

More preferably, the first sending module 54 and the second sending module send the first corresponding relationship updated by the updating module 53 and the third corresponding relationship determined by the determining submodule to the service scheduling device and the service processing devices respectively in the form of a document.

Obviously, those skilled in the art can make various modifications and transformations to the disclosure without deviating from the spirit and scope of the disclosure. In this way, if these modifications and transformations to the disclosure fall within the scope of the claims and equivalent technologies thereof of the disclosure, these modifications and transformations are intended to be included in the disclosure.

## Claims

1. A service scheduling system, comprising a service scheduling device and at least two service processing devices, wherein the service scheduling device is connected with the service processing devices via bus ports, further comprising a control device, wherein
the control device is configured to obtain connection status information of each bus port in the service scheduling system respectively, update a first corresponding relationship among transfer units in the service scheduling device and transfer units in the service processing devices according to the obtained connection status information of the bus port when judging that the changed connection status information is obtained, and send the updated first corresponding relationship to the service scheduling device;
the service scheduling device is configured to receive the updated first corresponding relationship sent from the control device, and schedule services to be scheduled sent from the service processing devices respectively according to the updated first corresponding relationship; and
the service processing device is configured to send the services to be scheduled to the service scheduling device, and process the services scheduled by the service scheduling device.

2. A service scheduling method, comprising:
obtaining connection status information of each bus port in a service scheduling system respectively by a control device;
updating a first corresponding relationship among transfer units in a service scheduling device and transfer units in service processing devices according to the obtained connection status information of the bus port when judging that the changed connection status information is obtained; and
sending the updated first corresponding relationship to the service scheduling device in the service scheduling system to indicate the service scheduling device to schedule services according to the updated first corresponding relationship.

3. The service scheduling method according to claim 2, wherein the step of updating the first corresponding relationship by the control device specifically comprises:
obtaining a second corresponding relationship among the transfer units in the service processing devices and the bus ports in the service scheduling system;
determining a third corresponding relationship among the bus ports in the service scheduling system according to the obtained connection status information of the bus ports; and
updating the first corresponding relationship among the transfer units in the service scheduling device and the transfer units in the service processing devices according to the second corresponding relationship and the third corresponding relationship.

4. The service scheduling method according to claim 3, further comprising:
sending the determined third corresponding relationship among the bus ports in the service scheduling system to the service processing devices in the service scheduling system by the control device.

5. The service scheduling method according to claim 4, wherein the control device sends the updated first corresponding relationship and the determined third corresponding relationship to the service scheduling device and the service processing devices respectively in a form of a document.

6. The service scheduling method according to any one of claims 2 to 5, wherein the connection status information of the bus port comprises:
information for identifying that the bus port is in an idle status; or
information for identifying that the bus port is in a working status, and identification information of a bus port connected with the bus port.

7. A control device, comprising:
an obtaining module configured to obtain connection status information of each bus port in a service scheduling system respectively;
a judging module configured to judge whether the obtaining module obtains the changed connection status information;
an updating module configured to update a first corresponding relationship among transfer units in a service scheduling device and transfer units in service processing devices according to the connection status information of the bus port obtained by the obtaining module when the judging module judges that the obtaining module obtains the changed connection status information; and
a first sending module configured to send the first corresponding relationship updated by the updating module to the service scheduling device in the service scheduling system.

8. The control device according to claim 7, wherein the updating module specifically comprises:
an obtaining submodule configured to obtain a second corresponding relationship among the transfer units in the service processing devices and the bus ports in the service scheduling system;
a determining submodule configured to determine a third corresponding relationship among the bus ports in the service scheduling system according to the connection status information of the bus ports obtained by the obtaining module; and
an updating submodule configured to update the first corresponding relationship among the transfer units in the service scheduling device and the transfer units in the service processing devices according to the second corresponding relationship obtained by the obtaining submodule and the third corresponding relationship determined by the determining submodule.

9. The control device according to claim 8, further comprising:
a second sending module configured to send the third corresponding relationship among the bus ports in the service scheduling system determined by the determining submodule to the service processing devices in the service scheduling system.

10. The control device according to claim 9, wherein the first sending module and the second sending module send the first corresponding relationship updated by the updating module and the third corresponding relationship determined by the determining submodule to the service scheduling device and the service processing devices respectively in a form of a document.
